# EUROPEAN PATENT APPLICATION

(11) **EP 0 920 232 A1**
(43) Date of publication of application: **02.06.1999**
(21) Application number: 98122712.7
(22) Date of filing: 30.11.1998
(51) Int. Cl.: H04Q 11/04

(54) **Cell assignment system**

(30) Priority: 01.12.1997 JP 330249/97
(71) Applicant: NEC CORPORATION, Tokyo (JP)
(72) Inventor: Nakaishi, Hiroshi, c/o NEC Corporation, Tokyo (JP)
(74) Representative: VOSSIUS & PARTNER

(57) **Abstract**

A cell assignment system of a station device connected to a plurality of remote devices in a star network configuration in a transmission system performing a bi-directional TDMA communication on a cell basis by controlling a band setting of the remote devices in a station device-driven manner, including a cell assigner for changing a cell assignment number in a distance measuring and in operation in a station device-driven manner, and an error cell detection parameter generator for renewing an error cell detection parameter precisely at the same time when the cell assignment number is changed. A space area allocated for a distance measuring can be used for an information transmission area in operation, and an error cell detection can be exactly carried out with a cell number change both in operation and in the distance measuring.

## Description

The present invention relates to a cell assignment system of a station device connected to a plurality of remote devices in a star network configuration in a transmission system performing a bi-directional TDMA (time division multiple access) communication on a cell basis by controlling a band setting of the remote devices in a station device-driven manner.

In a conventional cell assignment system, for example, as disclosed in JP-A-8-163168, a band of a signal in a direction from a remote device to a station device can be enlarged or diminished in real time in operation.

Further, in a conventional TDMA communication system, for example, as disclosed in Japanese Patent Laid-Open Publication No. 8-251129, a window for use in measuring a distance between a remote device and a station device can be made short so as to enlarge data transmission time.

In these conventional systems, there is no function to change a cell assignment number in a distance measuring and an operation in a station device-driven manner, and a space area allocated for a distance measuring area can be reserved to be unchanged in operation.

Moreover, since an error cell detecting parameter is not renewed precisely at the same time when a cell assignment number is changed, when the space area allocated for the distance measuring area is employed for an information transmission area in operation, the cell assignment number in operation is different from that in the distance measuring, and with an increase or decrease of cells, an error cell alarm can be generated.

It is therefore an object of the present invention to provide a cell assignment system in view of the aforementioned disadvantages of the prior art, which uses a space area allocated for a distance measuring area for an information transmission area in operation, and which is capable of preventing a malfunction of an error cell detector with an increase or decrease of a cell assignment number in not only the operation but also a distance measuring.

In accordance with one aspect of the present invention, there is provided a cell assignment system of a station device connected to a plurality of remote devices in a star network configuration in a transmission system performing a bi-directional time division multiple access communication on a cell basis by controlling a band setting of the remote devices in a station device-driven manner, comprising cell separating means which inputs an up cell flow from each remote device connected thereto, separates a distance measuring cell from the up cell flow and outputs the separated distance measuring cell and the remaining up cell flow from which the distance measuring cell is removed; error cell detecting means which inputs the up cell flow from the cell separating means and various signals and outputs the up cell flow and an alarm when anything abnormal is detected in the input up cell flow; control signal distributing means which receives a control signal from either an external terminal or an external device and outputs a distance measurement instruction signal and a cell assignment instruction signal; cell assigning means which inputs the distance measuring cell from the cell separating means and outputs an up cell assignment control signal, and which inputs the distance measurement instruction signal and the cell assignment instruction signal from the control signal distributing means, calculates a cell assignment, and controls the cell assignment using the cell assignment calculation result and each memory value; cell multiplexing means which inputs the up cell assignment control signal from the cell assigning means and a down cell flow, multiplexes the up cell assignment control signal to the down cell flow, and outputs the down cell flow; and error cell detection parameter generating means to renew an error cell detection parameter at the same time when a cell assignment number is changed.

A cell assignment system of the present invention can further comprise remote device address storage means which is connected to the control signal distributing means and inputs a remote device address-control signal correspondence signal therefrom; first timer means which is connected to the cell assigning means, starts a counting in response to a start instruction sent from the cell assigning means, and outputs a stop signal to the cell assigning means when time is up; and second timer means which is connected to the error cell detection parameter generating means, starts a counting in response to a start instruction from the error cell detection parameter generating means, and outputs a stop signal to the error cell detection parameter generating means when time is up.

The cell assigning means preferably includes a distance measurement controller which inputs the distance measurement cell, the distance measurement instruction signal and a distance measurement area indication signal and outputs a distance measurement result signal; a cell assignment calculator which inputs the cell assignment indication signal and the distance measurement area indication signal and outputs an up cell assignment position display signal, a cell assignment calculation end signal and a cell assignment result; a controller which inputs the cell assignment instruction signal, the distance measurement instruction signal, the distance measurement result signal, an error cell detection parameter generation end signal and the cell assignment calculation end signal and outputs a gate control signal and a memory selector control signal; a gate which inputs the gate control signal from the controller and the cell assignment result from the cell assignment calculator and selects one of a cell assignment RAM in a distance measuring, a cell assignment RAM 0-surface in operation and a cell assignment RAM 1-surface in operation to pass the cell assignment result to the selected one according to instructions of the gate control signal; a memory selector which inputs the memory selector control signal from the controller, selects one of the cell assignment RAM in the distance measuring, the cell assignment RAM 0-surface in operation and the cell assignment RAM 1-surface in operation to read out data stored in the selected one according to instructions of the memory selector control signal, and outputs the readout data; an up cell assignment control signal generator which inputs the data output from the memory selector, generates an up cell position display signal of each remote device using the input data, and outputs the up cell position display signal as an up cell assignment control signal.

Further, the error cell detection parameter generating means preferably includes a memory address controller which inputs the cell assignment instruction signal, the distance measurement instruction signal, a distance measurement result signal, an up cell assignment position display signal, an up cell position calculation end signal for each remote device, a first error cell detection parameter generation end signal and a second error cell parameter generation end signal, and outputs an error cell detection parameter generation end signal, a first selector control signal, an error cell parameter generator selection signal, a first gate control signal, and a second gate control signal; an up cell assignment change timing instructor which inputs the error cell detection generator selection signal, a frame pulse and an up cell position indication signal insertion start signal, and outputs a change timing indication signal and a cell selector control signal; an up cell position calculator for each remote device, which inputs the up cell assignment position display signal, calculates an up cell position of each remote device, outputs the up cell position generation end signal for each remote device at the end of the calculation, and thereafter outputs the calculation result to a first selector; the first selector which receives the calculation result from the up cell position calculator and the first selector control signal from the memory address controller and selects one of an up cell position RAM 0-surface and an up cell position RAM 1-surface for storing the calculation result of the up cell position calculator according to instructions of the first selector control signal; a first gate which inputs the first gate control signal from the memory address controller, reads the data out of the up cell position RAM 0-surface using the first gate control signal as a trigger, and outputs the readout data according to instructions of the first gate control signal; a second gate which inputs the second gate control signal from the memory address controller, reads the data out of the up cell position RAM 1-surface using the second gate control signal as a trigger, and outputs the readout data according to instructions of the second gate control signal; a previous value storage RAM which stores data of the error cell detection parameter and outputs the stored data to a second selector; a first error cell parameter generator in a normal operation, which outputs the error cell detection parameter held hitherto to the previous value storage RAM before receiving the data from the first gate or the second gate, calculates an error cell detection parameter in the normal operation on the basis of the data sent from the first gate or the second gate, and outputs the calculation result to the second selector, and the second error cell detection parameter generation end signal to the memory address controller; a second error cell parameter generator in a distance measuring; which calculates an error cell detection parameter in the distance measuring on the basis of the data sent from the first gate or the second gate, and outputs the calculation result to the second selector, and the first error detection parameter generation end signal to the memory address controller; and the second selector which inputs the second selector control signal from the up cell assignment change timing instructor, selects one of the data sent from the first error cell parameter generator, the data sent from the second error cell parameter generator, and the data sent from the previous value storage RAM according to instructions of the second selector control signal, and outputs the selected data as the error cell detection parameter.

In accordance with another aspect of the present invention, there is provided a cell assignment system of a station device connected to a plurality of remote devices in a star network configuration in a transmission system performing a bi-directional time division multiple access communication on a cell basis by controlling a band setting of the remote devices in a station device-driven manner, comprising cell separating means which inputs an up cell flow from each remote device connected thereto, separates a distance measuring cell from the up cell flow and outputs the separated distance measuring cell and the remaining up cell flow from which the distance measuring cell is removed; error cell detecting means which inputs the up cell flow from the cell separating means, an error cell detection parameter and an error cell detection inhibition signal and outputs the up cell flow and an alarm when anything abnormal is detected in the input up cell flow; cell assigning means which inputs the distance measuring cell from the cell separating means, a cell assignment instruction signal, a distance measurement instruction signal and a distance measurement area indication signal and outputs an up cell assignment control signal and a distance measurement result signal; cell multiplexing means which inputs the up cell assignment control signal from the cell assigning means, a frame pulse and a down cell flow, multiplexes the up cell assignment control signal to the down cell flow, and outputs the down cell flow and an up cell position indication signal insertion start signal; and error cell up cell position indication signal insertion start signal; and error cell detection stop controlling means which inputs the distance measurement instruction signal, the distance measurement result signal and the up cell position indication signal insertion start signal sent from the cell multiplexing means, and outputs the error cell detection inhibition signal to the error cell detecting means.

The error cell detecting means can include alarming means monitors a cell output from each remote device in the up cell flow on the basis of the error cell detection parameter, and outputs an alarm when an error is detected, but prevents the alarm when the cell assignment number is changed.

The objects, features and advantages of the present invention will become more apparent from the consideration of the following detailed description, taken in conjunction with the accompanying drawings, in which:
Fig. 1 is a block diagram of a cell assignment system according to a first embodiment of the present invention;
Fig. 2 is a block diagram of a cell assigner shown in Fig. 1;
Fig. 3 is a block diagram of an error cell detection parameter generator shown in Fig. 1;
Figs. 4 and 5 are flow charts showing an operation of the cell assigner shown in Fig. 2;
Figs. 6, 7 and 8 are flow charts showing an operation of the error cell detection parameter generator shown in Fig.3;
Fig. 9 is a block diagram of a cell assignment system according to a second embodiment of the present invention; and
Fig. 10 is a block diagram of a cell assignment system according to a third embodiment of the present invention.

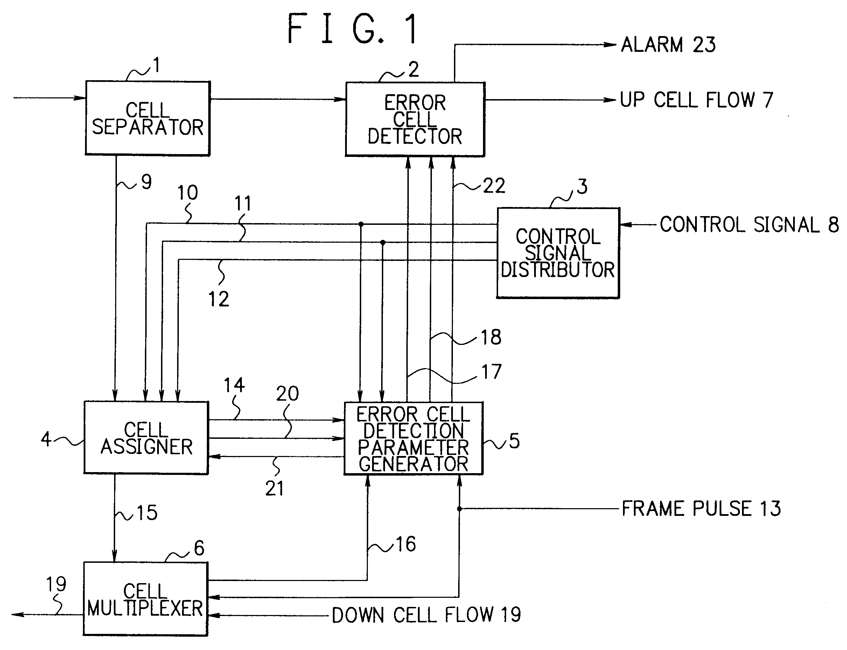

Referring now to the drawings, there is shown in Fig. 1 a cell assignment system of a station device connected to a plurality of remote devices in a star network configuration in a transmission system performing a bi-directionsl TDMA (time division multiple access) communication on a cell basis by controlling a band setting of the remote devices in a station device-driven manner according to a first embodiment of the present invention.

In Fig. 1, the cell assignment system of the station device comprises a cell separator 1, an error cell detector 2, a control signal distributor 3, a cell assigner 4, an error cell detection parameter generator 5 and a cell multiplexer 6.

The cell separator 1 inputs an up cell flow 7 from each remote device connected thereto, separates a distance measuring cell 9 from the input up cell flow 7, and outputs the distance measuring cell 9 to the cell assigner 4, and the remaining up cell flow 7 (the distance measuring cell 9 was removed) to the error cell detector 2.

The error cell detector 2 inputs the up cell flow 7 from the cell separator 1, and an error cell detection parameter 17, a change timing indication signal 18 and an error cell detection INH (inhibition) signal 22 from the error cell detection parameter generator 5, and outputs the up cell flow 7, and an alarm 23 when anything abnormal is detected in the input up cell flow 7.

The control signal distributor 3 receives a control signal 8 from an external terminal or an external device, and outputs a cell assignment instruction signal 10, a distance measurement instruction signal 11 and a distance measurement area indication signal 12 to the cell assigner 4, and the cell assignment instruction signal 10 and the distance measurement instruction signal 11 to the error cell detection parameter generator 5.

The cell assigner 4 receives the distance measuring cell 9 from the cell separator 1, the cell assignment instruction signal 10, the distance measurement instruction signal 11 and the distance measurement area indication signal 12 from the control signal distributor 3, and an error cell detection parameter generation end signal 21 from the error cell detection parameter generator 5. The cell assigner 4 outputs an up cell assignment position display signal 14 and a distance measurement result signal 20 to the error cell detection parameter generator 5, and an up cell assignment control signal 15 to the cell multiplexer 6.

The error cell detection parameter generator 5 receives the cell assignment instruction signal 10 and the distance measurement instruction signal 11 from the control signal distributor 3, the up cell assignment position display signal 14 and the distance measurement result signal 20 from the cell assigner 4, an up cell position indication signal insertion start signal 16 from the cell multiplexer 6, and a frame pulse from outside. The error cell detection parameter generator 5 outputs the error cell detection parameter generation end signal 21 to the cell assigner 4, and the error cell detection parameter 17, the change timing indication signal 18 and the error cell detection INH signal 22 to the error cell detector 2.

The cell multiplexer 6 receives the up cell assignment control signal 15 from the cell assigner 4, a frame pulse 13 and a down cell flow 19, multiplexes the up cell assignment control signal 15 to the down cell flow 19, and outputs the up cell position indication signal insertion start signal 16 to the error cell detection parameter generator 5, and the down cell flow 19.

An operation of the cell assignment system shown in Fig. 1 will be described in detail.

First, in the cell assigner 4, an operation is triggered by the input of an error cell detection parameter generation end signal 21 from the error cell detection parameter generator 5. Thereafter, when receiving a distance measurement instruction signal 11, in order to secure a distance measurement window, the cell assigner 4 reduces the present cell assignment number, calculates a cell assignment for the distance measurement, and outputs its resulted up cell assignment control signal 15 to the cell multiplexer 6, thereby carrying out a cell assignment control. Then, when receiving a cell assignment instruction signal 10 after inputting an error cell detection parameter generation end signal 21 from the error cell detection parameter generator 5, the cell assigner 4 calculates a new cell assignment and outputs the resulted up cell assignment control signal 15 to the cell multiplexer 6 to control the cell assignment.

When receiving no cell assignment instruction signal 10 but a distance measurement instruction signal 11, the error cell detection parameter generator 5 can use the error cell detection parameter previously produced for the distance measurement because of no change in the cell assignment. Thus, the error cell detection parameter generator 5 outputs the error cell detection parameter generation end signal 21 to the cell assigner 4, calculates a change timing, and outputs the calculated error cell detection parameter 17 and a change timing indication signal 18 to the error cell detector 2. Thereafter, when receiving a distance measurement result signal 20 from the cell assigner 4, the error cell detection parameter generator 5 changes the error cell detection parameter 17 to the present one used hitherto in operation immediately, calculates a change timing, and outputs the error cell detection parameter 17 and the change timing indication signal 18 to the error cell detector 2.

When receiving no distance measurement instruction signal 11 but a cell assignment instruction signal 10, the error cell detection parameter generator 5 calculates a new error cell detection parameter to be used in operation, calculates a change timing, and outputs an error cell detection parameter 17 and a change timing indication signal 18 to the error cell detector 2, and an error cell detection parameter generation end signal 21 to the cell assigner 4.

When receiving a cell assignment instruction signal 10 and a distance measurement instruction signal 11, the error cell detection parameter generator 5 calculates a new error cell detection parameter to be used in operation and an error cell detection parameter to be used in a distance measurement, and then outputs an error cell detection parameter generation end signal 21 to the cell assigner 4, and the error cell detection parameter 17 to be used in the distance measurement and the change timing indication signal 18 to the error cell detector 2. When the distance measurement is successful, the error cell detection parameter generator 5 calculates a change timing, and outputs the newly calculated error cell detection parameter 17 to be used in operation and the change timing indication signal 18 to the error cell detector 2.

When receiving no cell assignment instruction signal 10 but a distance measurement instruction signal 11 and never receiving any cell assignment instruction signal 10 in the past, the error cell detection parameter generator 5 outputs an error cell detection INH signal 22 to the error cell detector 2 so as to inhibit its error cell detecting function.

The error cell detector 2 monitors a peak cell rate or a fluctuation of a cell output from each remote device in the up cell flow 7 on the basis of the input error cell detection parameter 17, and outputs an alarm when an error is detected. Further, when inputting the error cell detection INH signal 22, the error cell detector 2 inhibits the error cell detection.

The cell multiplexer 6 multiplexes the up cell assignment control signal 15 to the input down cell flow 19 on the basis of the input frame pulse 13, outputs the down cell flow 19, and further outputs an up cell position indication signal insertion start signal 16 to the error cell detection parameter generator 5 so that the error cell detection parameter generator 5 may transmit an error cell detection start timing to the error cell detector 2.

The control signal distributor 3 extracts a cell assignment instruction signal 10, a distance measurement instruction signal 11 and a distance measurement area indication signal 12 from a received control signal 8, and outputs these signals to the cell assigner 4 and the error cell detection parameter generator 5, as described above.

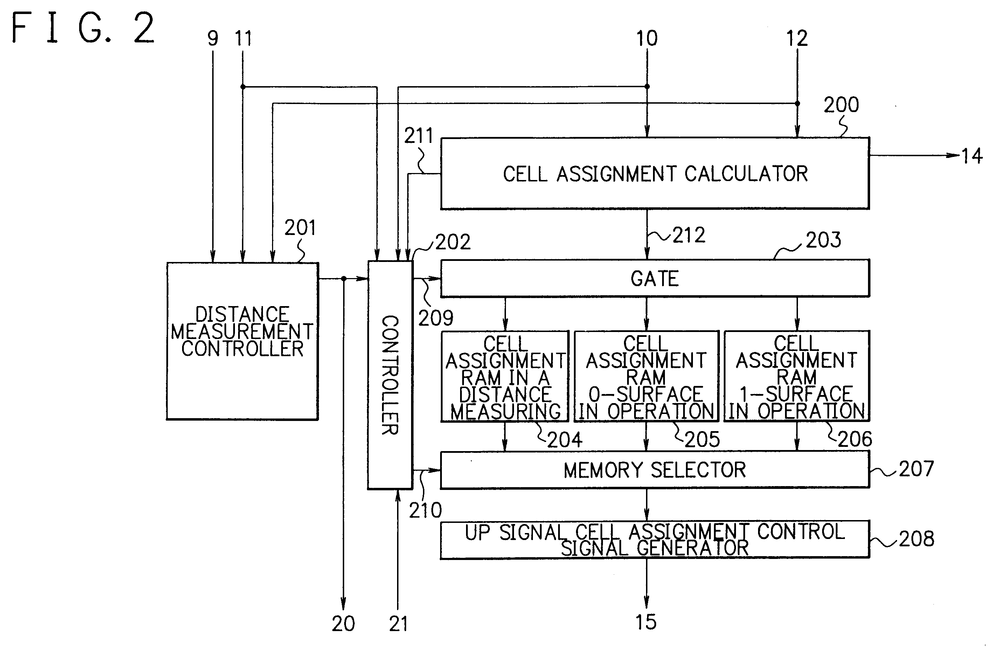

Next, the cell assigner 4 will be described in detail in connection with Fig. 2 showing one embodiment of the cell assigner 4.

As shown in Fig. 2, in the cell assigner 4, a cell assignment calculator 200 receives the cell assignment instruction signal 10, the distance measurement area indication signal 12 and outputs the up cell assignment position display signal 14, a cell assignment calculation end signal 211 and a cell assignment result 212. A distance measurement controller 201 inputs the distance measurement cell 9, the distance measurement instruction signal 11 and the distance measurement area indication signal 12, and outputs the distance measurement result signal 20. A controller (CONT) 202 inputs the cell assignment instruction signal 10, the distance measurement instruction signal 11, the distance measurement result signal 20, the error cell detection parameter generation end signal 21, and the cell assignment calculation end signal 211, and outputs a gate control signal 209 and a memory selector control signal 210.

A gate 203 inputs the cell assignment result 212 and outputs the same to one of a cell assignment RAM 204 in a distance measuring, a cell assignment RAM 0-surface 205 in operation, and a cell assignment RAM 1-surface 206 in operation according to the instructions of the gate control signal 209 sent from the controller 202. A memory selector 207 selects the data stored in one of the cell assignment RAM 204, the cell assignment RAM 0-surface 205 and the cell assignment RAM 1-surface 206 according to the memory selector control signal 210 fed from the controller 202, and outputs the selected data. An up signal cell assignment control signal generator 208 inputs the data sent from the memory selector 207, produces an up cell position display signal of each remote device using the input data, and outputs the up cell position display signal as the up cell assignment control signal 15.

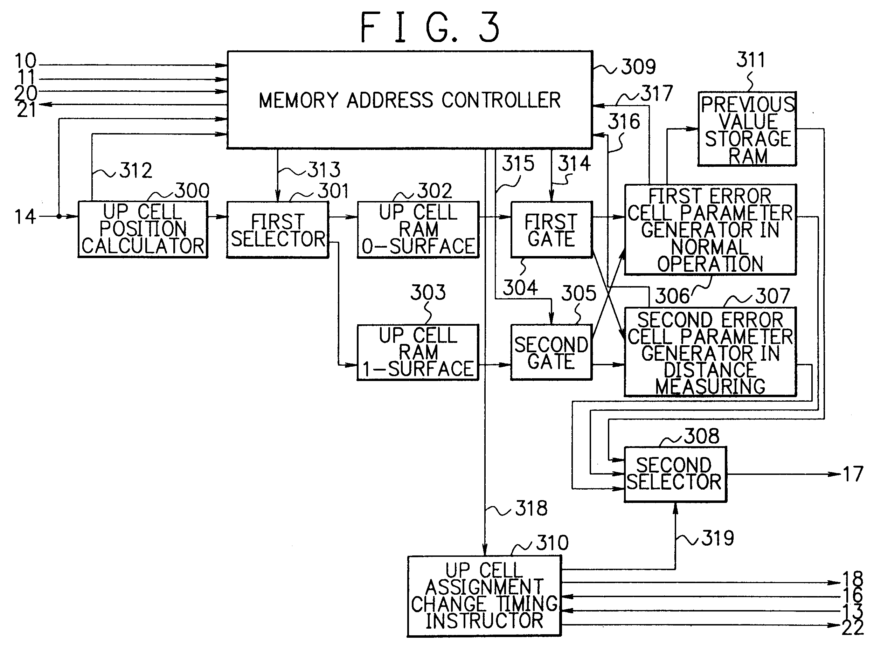

Further, the error cell detection parameter generator 5 will be described in detail with reference to Fig. 3 showing one embodiment of the error cell detection parameter generator 5.

As shown in Fig. 3, in the error cell detection parameter generator 5, a memory address controller 309 inputs the cell assignment instruction signal 10, the distance measurement instruction signal 11, the distance measurement result signal 20, the up cell assignment position display signal 14, an up cell position calculation end signal 312 for each remote device, a first error cell detection parameter generation end signal 316 and a second error cell detection parameter generation end signal 317, and outputs the error cell detection parameter generation end signal 21, a first SEL (selector) control signal 313, an error cell detection parameter generator selection signal 318, a first gate control signal 314 and a second gate control signal 315.

An up cell assignment change timing instructor 310 receives the error cell detection parameter generator selection signal 318, the frame pulse 13 and the up cell position indication signal insertion start signal 16, and outputs the change timing indication signal 18 and a second SEL control signal 319.

An up cell position calculator 300 for each remote device receives the up cell assignment position display signal 14, calculates an up cell position of each remote device, outputs an up cell position calculation end signal 312 for each remote device at the end of the calculation, and thereafter outputs the calculation result to a first selector 301. The first selector 301 selects one of an up cell position RAM 0-surface 302 and an up cell position RAM 1-surface 303 so as to send the calculation result of the up cell position calculator 300 to the selected one according to the instructions of the input first SEL control signal 313.

A first gate 304 receives the data read out of the up cell position RAM 0-surface 302 using the input first gate control signal 314 as a trigger, and outputs the data according to the instructions of the first gate control signal 314. A second gate 305 receives the data read out of the up cell position RAM 1-surface 303 using the input second gate control signal 315 as a trigger, and outputs the data according to the instructions of the second gate control signal 315.

A first error cell parameter generator 306 in the normal operation outputs the error cell detection parameter held hitherto to a previous value storage RAM 311 before receiving the data from the first gate 304 or the second gate 305, calculates an error cell detection parameter in the normal operation on the basis of the data sent from the first gate 304 or the second gate 305, and outputs the calculation result to a second selector 308, and the second error cell detection parameter generation end signal 317 to the memory address controller 309. A second error cell parameter generator 307 in the distance measuring calculates an error cell detection parameter in the distance measuring on the basis of the data sent from the first gate 304 or the second gate 305, and outputs the calculation result to the second selector 308, and the first error cell detection parameter generation end signal 316 to the memory address controller 309.

The previous value storage RAM 311 stores the data sent from the first error cell parameter generator 306, and outputs the stored data to the second selector 308. The second selector 308 selects the input data from the first error cell detection parameter generator 306, the second error cell detection parameter generator 307 or the previous value storage RAM 311 according to the instructions of the second SEL control signal 319, and outputs the selected data as the error cell detection parameter 17.

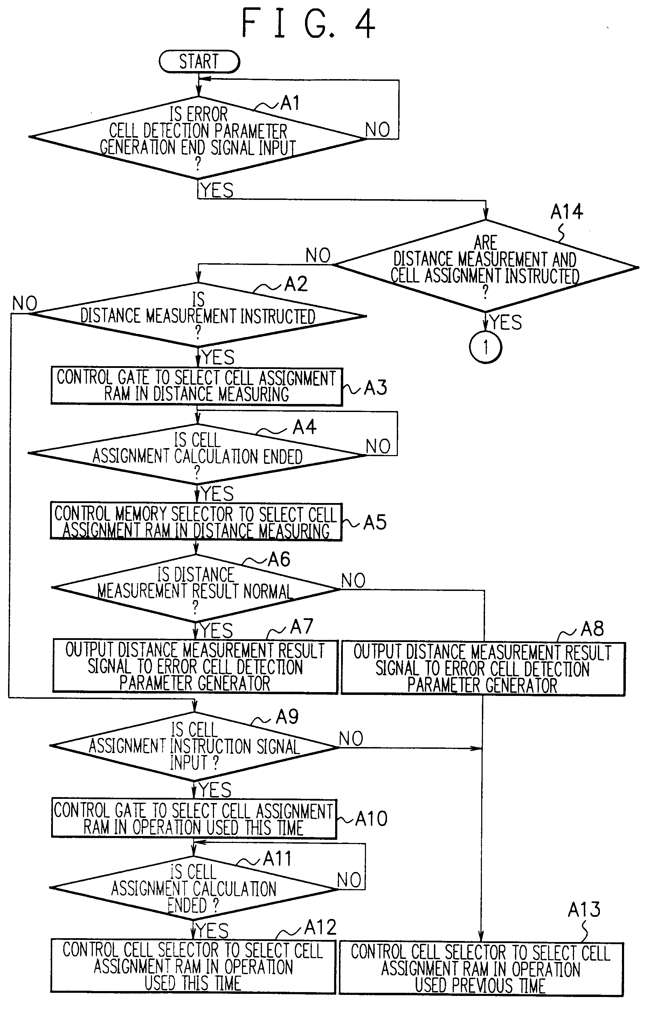

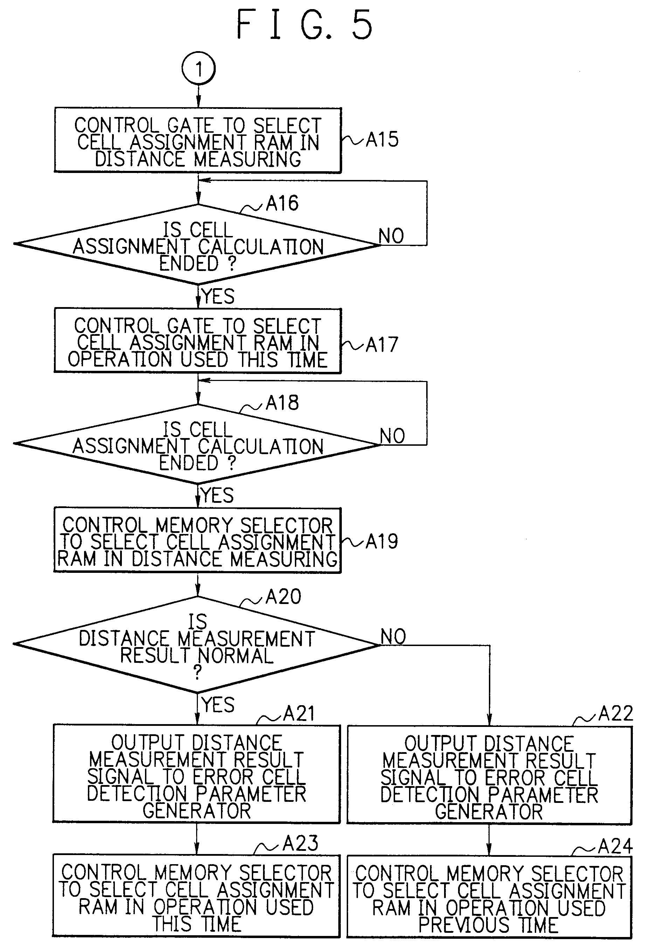

Then, an operation of the cell assigner 4 shown in Fig. 2 will be described in detail in connection with Figs. 4 and 5.

In Figs. 4 and 5, first, in the cell assigner 4, an operation is triggered by the input of an error cell detection parameter generation end signal 21 from the error cell detection parameter generator 5 in step A1. Thereafter, when inputting a distance measurement instruction signal 11, the controller 202 outputs the gate control signal 209 to the gate 203 so as to permit the gate 203 to select the cell assignment RAM 204 in the distance measuring, and the gate 203 passes the cell assignment result 212 fed from the cell assignment calculator 200 to the cell assignment RAM 204 in steps A2 and A3. In the cell assignment calculator 200, in order to secure the distance measurement window designated by the distance measurement area indication signal 12, the present cell assignment number is reduced, and the cell assignment for the distance measurement is calculated. When the calculation is completed in step A4, the cell assignment calculator 200 outputs the cell assignment result 212 and the up cell assignment position display signal 14 and also outputs the cell assignment calculation end signal 211 to the controller 202.

Further, when receiving the distance measurement instruction signal 11 and the distance measurement area indication signal 12, the distance measurement controller 201 determines the position of the distance measurement window and detects the distance measurement cell 9 within the distance measurement window. When inputting the cell assignment calculation end signal 211, the controller 202 outputs the memory selector control signal 210 to the memory selector 207 so as to permit the memory selector 207 to select the cell assignment RAM 204 in the distance measuring, and the memory selector 207 reads the data out of the cell assignment RAM 204 and outputs the readout data to the up signal cell assignment control signal generator 208. The up signal cell assignment control signal generator 208 outputs the input data as the up cell assignment control signal 15 in step A5.

Thereafter, the distance measurement controller 201 outputs the distance measurement result signal 20 to the controller 202 and the outside of the cell assigner 4 in steps A7 and A8. When anything abnormal is detected in the distance measurement result in step A6, the controller 202 outputs the memory selector control signal 210 to the memory selector 207 so that the memory selector 207 may selects either the cell assignment RAM 0-surface 205 used just before the distance measuring or the cell assignment RAM 1-surface 206. Then, the memory selector 207 reads the data out of the cell assignment RAM 0-surface 205 or the cell assignment RAM 1-surface 206 and outputs the readout data to the up signal cell assignment control signal generator 208 in step A13. The up signal cell assignment control signal generator 208 outputs the input data as the up cell assignment control signal 15.

The controller 202 receives the distance measurement result signal 20. When the distance measurement result is normal in step A6 or when the controller 202 inputs none of the distance measurement instruction signal 11 in step A2 and the cell assignment instruction signal 10 in step A9 after starting the operation by the input of the error cell detection parameter generation end signal 21 as the trigger, the controller 202 outputs the memory selector control signal 210 so as to permit the memory selector 207 to select either the cell assignment RAM 0-surface 205 or the cell assignment RAM 1-surface 206. The memory selector 207 then reads the data out of either the cell assignment RAM 0-surface 205 or the cell assignment RAM 1-surface 206 and outputs the readout data to the up signal cell assignment control signal generator 208 in step A13. The up signal cell assignment control signal generator 208 outputs the input data as the up cell assignment control signal 15.

When the cell assigner 4 receives no distance measurement instruction signal 11 in step A2 but the cell assignment instruction signal 10 in step A9 after starting the operation by the input of the error cell detection parameter generation end signal 21 as the trigger, the cell assignment calculator 200 calculates a new cell assignment, and the controller 202 having received the distance measurement result signal 20 outputs the gate control signal 209 to the gate 203 so that the gate 203 may select either the cell assignment RAM 0-surface 205 or the cell assignment RAM 1-surface 206. The gate 203 transfers the cell assignment result 212 to either the cell assignment RAM 0-surface 205 or the cell assignment RAM 1-surface 206 in step A10. Moreover, the controller 202 having received the cell assignment calculation end signal 211 in step A11 outputs the memory selector control signal 210 to the memory selector 207 so that the memory selector 207 may select either the cell assignment RAM 0-surface 205 or the cell assignment RAM 1-surface 206. The memory selector 207 then reads the data out of either the cell assignment RAM 0-surface 205 or the cell assignment RAM 1-surface 206 and outputs the readout data to the up signal cell assignment control signal generator 208 in step A12. The up signal cell assignment control signal generator 208 outputs the input data as the up cell assignment control signal 15.

Further, when the controller 202 receives the distance measurement instruction signal 11 and the cell assignment instruction signal 10 after starting the operation by the input of the error cell detection parameter generation end signal 21 as the trigger in step A14, as shown in Fig. 5, first, the same operations as above steps A3 and A4 are carried out in steps A15 and A16. Then, the cell assignment calculator 200 calculates the cell assignment for the distance measuring and thereafter calculates a new cell assignment on the basis of the cell assignment instruction signal 10 newly input in this time. After the calculation, the cell assignment calculator 200 outputs the cell assignment calculation end signal 211 to the controller 202. The controller 202 then performs the same operations as above steps A10 and A11 in steps A17 and A18. Thereafter, the same operations as above steps A5 to A8 are executed in steps A19 to A22. After the same operation as above step A7 in step A21 is finished, the same operation as above step A12 is carried out in step A23. After the same operation as above step A8 in step A22 is completed, the same operation as above step A13 is carried out in step A24.

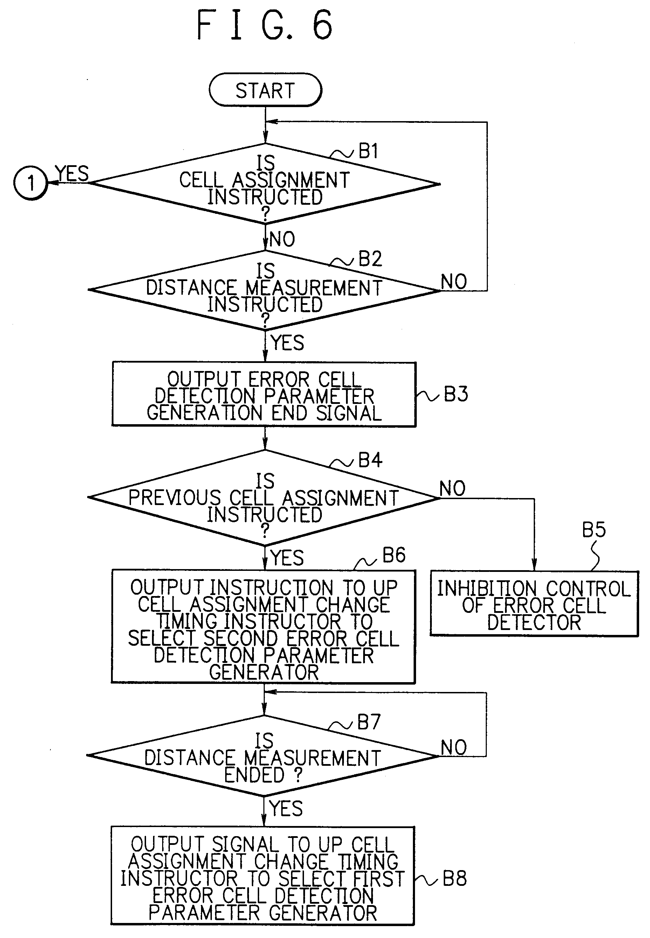

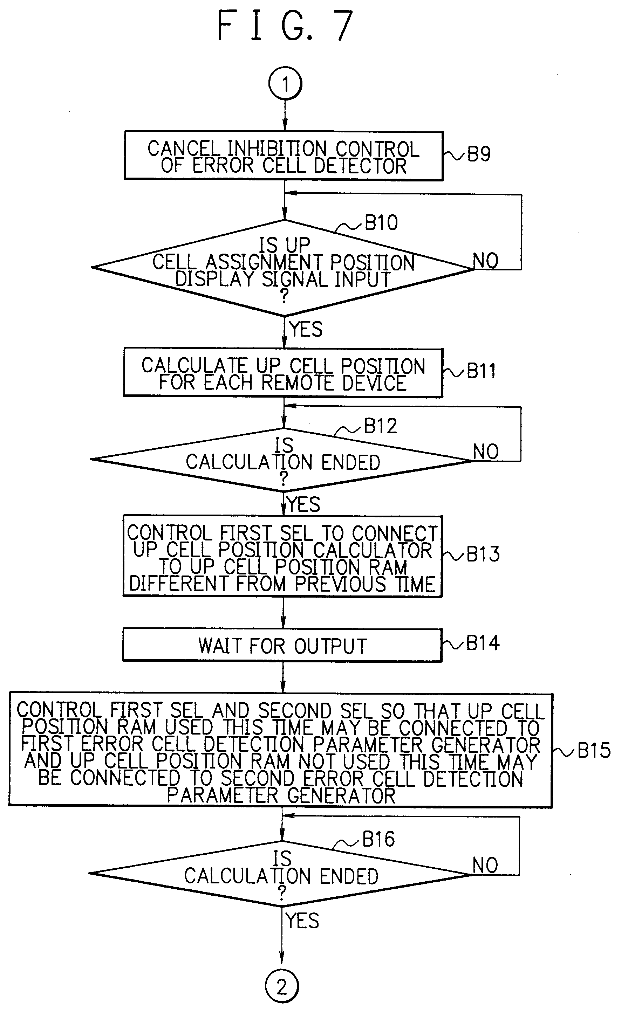

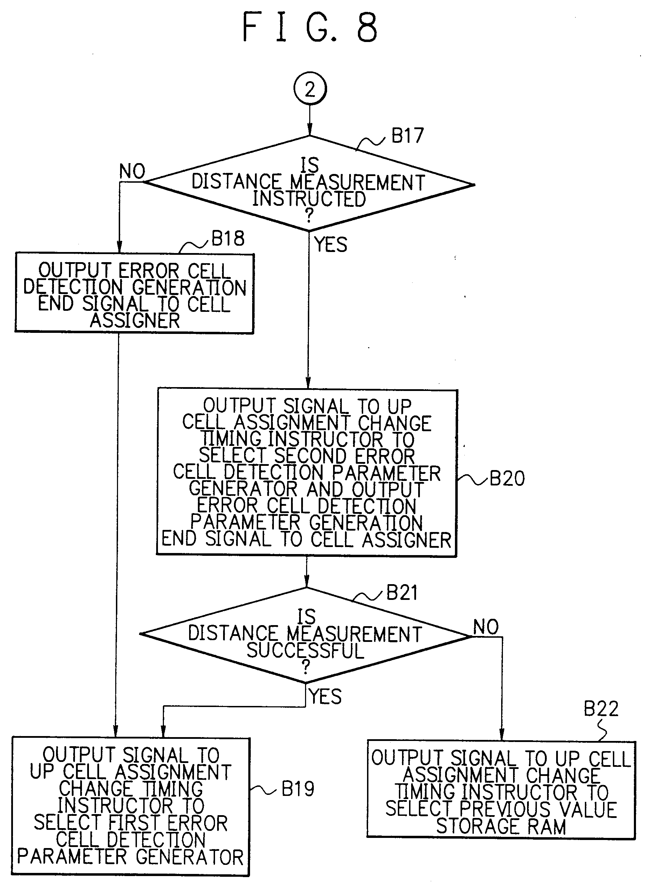

Next, an operation of the error cell detection parameter generator 5 shown in Fig. 3 will be described in detail with reference to Figs. 6 to 8.

In Figs. 6 to 8, first, when the memory address controller 309 inputs no cell assignment instruction signal 10 in step B1 but a distance measurement instruction signal 11 in step B2, because of no change in the cell assignment, the previously generated error cell detection parameter for the distance measurement can be used, and the memory address controller 309 outputs an error cell detection parameter generation end signal 21 to the cell assigner 4 in step B3. When receiving the cell assignment instruction signal 10 hitherto in step B4, the memory address controller 309 outputs an error cell detection parameter generator selection signal 318 to the up cell assignment change timing instructor 310 so that the second error cell detection parameter generator 307 in the distance measuring may be selected in step B6. Thus, the up cell assignment change timing instructor 310 outputs a second SEL control signal 319 to the second selector 308 so as to permit the second error cell detection parameter generator 307 in the distance measuring to be selected, inputs a frame pulse 13 and an up cell position indication signal insertion start signal 16, calculates a timing for outputting a change timing indication signal 18 from a transmission delay of a down cell flow, a fixed delay of up and down cells within a remote device, a circuit delay of a station device, a transmission delay of an up cell flow and the like, and outputs the change timing indication signal 18.

When the memory address controller 309 never inputs the cell assignment instruction signal 10 hitherto in step B4 after the operations in steps B1 to B3, there is no cell assignment in the distance measuring in this time, and the memory address controller 309 outputs the error cell detection parameter generator selection signal 318 to the up cell assignment change timing instructor 310 so as to inhibit the error cell detection. The up cell assignment change timing instructor 310 inputs the frame pulse 13 and the up cell position indication signal insertion start signal 16, calculates a timing for outputting an error cell detection INH signal 22 from the transmission delay of the down cell flow, the fixed delay of the up and down cells within the remote device, the circuit delay of the station device, the transmission delay of the up cell flow and the like, and outputs the error cell detection INH signal 22 in step B5.

Thereafter, the memory address controller 309 having received the distance measurement result signal 20 detects the end of the distance measuring in step B7 and outputs the error cell detection parameter generator selection signal 318 to the up cell assignment change timing instructor 310 so that the first error cell detection parameter generator 306 in the normal operation may be selected in step B8. The up cell assignment change timing instructor 310 outputs the second SEL control signal 319 to the second selector 308 so as to permit the first error cell detection parameter generator 306 in the normal operation to be selected, inputs the frame pulse 13 and the up cell position indication signal insertion start signal 16, calculates the timing for outputting the change timing indication signal 18 from the transmission delay of the down cell flow, the fixed delay of the up and down cells within the remote device, the circuit delay of the station device, the transmission delay of the up cell flow and the like, and outputs the change timing indication signal 18.

Further, the memory address controller 309 having received the cell assignment instruction signal 10 operates in the same manner as step B5 so as to permit the up cell assignment change timing instructor 310 to output the error cell detection INH signal 22 for canceling the inhibition of the error cell detection in step B9. Thereafter, the up cell position calculator 300 for each remote device, having input an up cell assignment position display signal 14 in step B10, calculates the position of the up cell of each remote device in step B11. The memory address controller having input an up cell position calculation end signal 312 after receiving the up cell assignment position display signal 14, detects the end of the calculation of step B11 in step B12 and outputs a first SEL control signal 313 to the first selector 301 so that the first selector 301 may pass the output of the up cell position calculator 300 to either the up cell position RAM 0-surface 302 or the up cell position RAM 1-surface 303 different from the previous time in step B13.

The memory address controller 309 waits until the output of the up cell position calculator 300 is passed to either the up cell position RAM 0-surface 302 or the up sell position RAM 1-surface 303 in step B14, and outputs a first gate control signal 314 and a second gate control signal 315 to the first gate 304 and the second gate 305, respectively, to control the first gate 304 and the second gate 305 so that one of the up cell position RAM 0-surface 302 and the up cell position RAM 1-surface 303 having received the output of the up cell position calculator 300 may be connected to the first error cell detection parameter generator 306 and the other of the up cell position RAM 0-surface 302 and the up cell position RAM 1-surface 303 may be connected to the second error cell detection parameter generator 307 via the first and the second gates 304 and 305 in step B15.

The first error cell detection parameter generator 306 in the normal operation inputs the up cell position data of each remote device, calculates an error cell detection parameter every each remote device, and outputs a second error cell detection parameter generation end signal 317 to the memory address controller 309. Similarly, the second error cell detection parameter generator 307 in the distance measuring inputs the up cell position data of each remote device, calculates an error cell detection parameter every each remote device, and outputs a first error cell detection parameter generation end signal 316 to the memory address controller 309.

When detecting the input of the first error cell detection parameter generation end signal 316 and the second error cell detection parameter generation end signal 317 in step B16, the memory address controller 309 detects whether or not the distance measurement instruction signal 11 is input. When detecting no input of the distance measurement instruction signal 11 in step B17, the memory address controller 309 outputs the error cell detection parameter generation end signal 21 in step B18, and the error cell detection parameter generator 5 carries out the same operation as above step B8 in step B19. On the other hand, after the detection of the input of the first error cell detection parameter generation end signal 316 and the second error cell detection parameter generation end signal 317 in step B16, when detecting the input of the distance measurement instruction signal 11 in step B17, the memory address controller 309 executes the same operations as above steps B6 and B18, and the error cell detection parameter generator 5 operates in the same manner as above steps B6 and B18 in step B20.

Thereafter, when the input distance measurement result signal 20 represents a successful distance measuring in step B21, the memory address controller 309 performs the same operation as step B19. On the other hand, when the input distance measurement result signal 20 represents an unsuccessful distance measuring in step B21, the memory address controller 309 outputs the error cell detection parameter generator selection signal 318 to the up cell assignment change timing instructor 310 so as to select the previous value storage RAM 311. The up cell assignment change timing instructor 310 outputs the second SEL control signal 319 to the second selector 308 so as to permit the previous value storage RAM 311 to be selected, inputs the frame pulse 13 and the up cell position indication signal insertion start signal 16, calculates the timing for outputting the change timing indication signal 18 from the transmission delay of the down cell flow, the fixed delay of the up and down cells within the remote device, the circuit delay of the station device, the transmission delay of the up cell flow and the like, and outputs the change timing indication signal 18 in steps B21 and B22.

Thereafter, the error cell detector 2 monitors a peak cell rate or a fluctuation of a cell output from each remote device in the up cell flow 7 on the basis of the input error cell detection parameter 17, and outputs an alarm when an error is detected. Then, when inputting the error cell detection INH signal 22, the error cell detector 2 inhibits the error cell detection.

The cell multiplexer 6 multiplexes the up cell assignment control signal 15 to the input down cell flow 19 on the basis of the input frame pulse 13, outputs the down cell flow 19, and further outputs an up cell position indication signal insertion start signal 16 to the error cell detection parameter generator 5 so that the error cell detection parameter generator 5 may transmit an error cell detection start timing to the error cell detector 2.

The control signal distributor 3 extracts a cell assignment instruction signal 10, a distance measurement instruction signal 11 and a distance measurement area indication signal 12 from a received control signal 8, and outputs these signals to the cell assigner 4 and the error cell detection parameter generator 5.

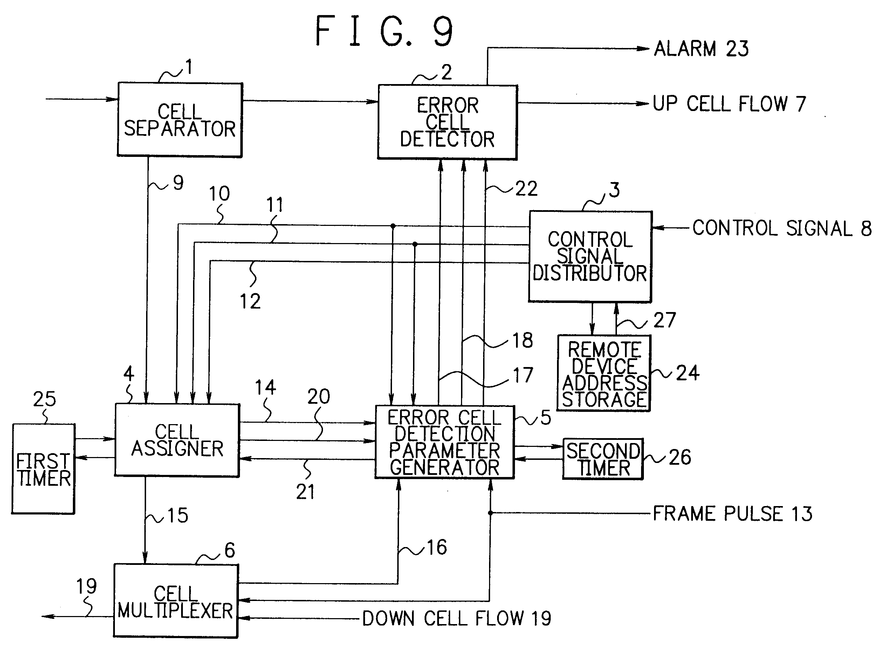

Next, Fig. 9 illustrates a cell assignment system of a station device according to a second embodiment of the present-invention.

In this embodiment, as shown in Fig. 9, the cell assignment system further comprises a remote device address storage 24, a first timer 25 and a second timer 26 besides those members shown in Fig. 1. The same members as those shown in Fig. 1 have the same constructions and functions and thus the detailed description thereof can be omitted for brevity.

In Fig. 9, the remote device address storage 24 is connected to the control signal distributor 3 and outputs a remote device address-control signal correspondence signal 27 to the control signal distributor 3. The remote device address-control signal correspondence signal 27 makes a one-to-one correspondence between the remote device address and an ID (identification) of a control signal 8 supplied to the control signal distributor 3. When receiving the remote device address-control signal correspondence signal 27 from the remote device address storage 24, the control signal distributor 3 sends back this signal to the remote device address storage 24, and the remote device address storage 24 stores the data so as to make a one-to-one correspondence between the remote device address and the ID of the control signal 8.

Then, when receiving a control signal 8, the control signal distributor 3 extracts the ID of the input control signal 8 and outputs the remote device address-control signal correspondence signal 27 with the extracted ID to the remote device address storage 24. The remote device address storage 24 then outputs the address of the remote device corresponding to the ID used as a key to the control signal distributor 3. The control signal distributor 3 attaches the remote device address to the input control signal 8 to output a cell assignment instruction signal 10, a distance measurement instruction signal 11 and a distance measurement area indication signal 12.

The first timer 25 coupled with the cell assigner 4 starts a counting when receiving a start instruction from the cell assigner 4, and outputs a stop signal to the cell assigner 4 when the time is up. The cell assigner 4 outputs the start instruction to the first timer 25 after receiving the distance measurement instruction signal 11, and enables the cell assignment instruction signal 10 when inputting the cell assignment instruction signal 10 before receiving the stop signal from the first timer 25. The cell assigner 4 carries out a cell assignment calculation, outputs the start instruction to the first timer 25 when performing the calculation, continues the processing when the cell assignment calculation is finished before receiving the stop signal from the first timer 25, and stops the processing when the cell assignment calculation is not finished.

The second timer 26 connected to the error cell detection parameter generator 5 starts a counting when inputting a start instruction from the error cell detection parameter generator 5, and outputs a stop signal to the error cell detection parameter generator 5 when the time is up. The error cell detection parameter generator 5 outputs the start instruction to the second timer 26 after receiving the cell assignment instruction signal 10, and enables the distance measurement instruction signal 11 when receiving the distance measurement instruction signal 11 before inputting the stop signal from the second timer 26. The error cell detection parameter generator 5 calculates for generating the error cell detection parameter, outputs the start instruction to the second timer 26 when carrying out the calculation, continues the processing when the calculation for generating the error cell detection parameter is finished before receiving the stop signal from the second timer 25, and stops the processing when the calculation for generating the error cell detection parameter is not finished.

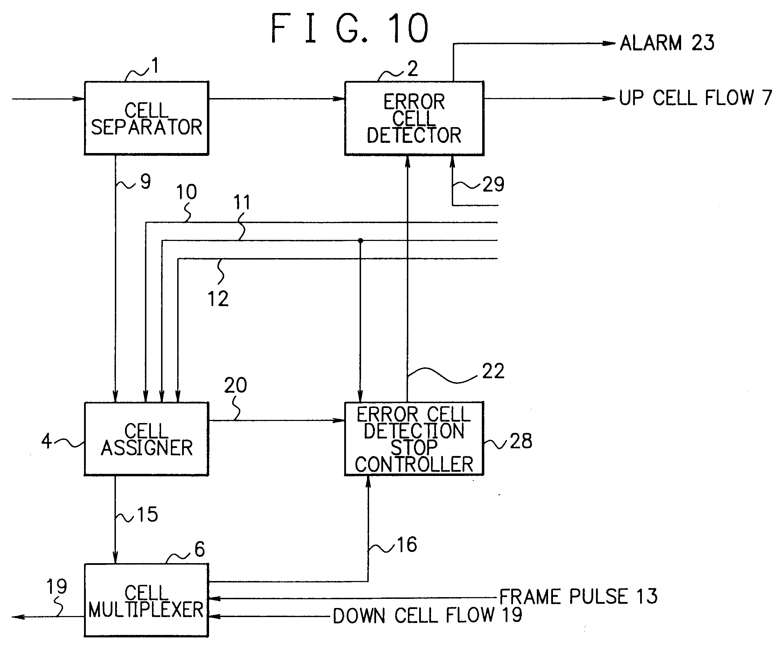

Next, Fig. 10 illustrates a cell assignment system of a station device according to a third embodiment of the present invention.

In this embodiment, as shown in Fig. 10, the cell assignment system comprises a cell separator 1, an error cell detector 2, a cell assigner 4, an error cell detection stop controller 28 and a cell multiplexer 6.

The cell separator 1 inputs an up cell flow 7 from each remote device connected thereto, separates a distance measuring cell 9 from the input up cell flow 7, and outputs the distance measuring cell 9 to the cell assigner 4, and the remaining up cell flow 7 (the distance measuring cell 9 was removed) to the error cell detector 2.

The error cell detector 2 inputs the up cell flow 7 from the cell separator 1, an error cell detection parameter 29 and an error cell detection INH (inhibition) signal 22 from the error cell detection stop controller 28, and outputs the up cell flow 7, and an alarm 23 when anything abnormal is detected in the input up cell flow 7.

The cell assigner 4 receives the distance measuring cell 9 from the cell separator 1, the cell assignment instruction signal 10, the distance measurement instruction signal 11 and the distance measurement area indication signal 12, and outputs an up cell assignment control signal 15 to the cell multiplexer 6, and a distance measurement result signal 20 to the error cell detection stop controller 28.

The error cell detection stop controller 28 receives the distance measurement instruction signal 11, the distance measurement result signal 20 from the cell assigner 4, and an up cell position indication signal insertion start signal 16 from the cell multiplexer 6, and output the error cell detection INH signal 22 to the error cell detector 2.

The cell multiplexer 6 receives the up cell assignment control signal 15 from the cell assigner 4, a frame pulse 13 and a down cell flow 19, multiplexes the up cell assignment control signal 15 to the down cell flow 19, and outputs the up cell position indication signal insertion start signal 16 to the error cell detection stop controller 28, and the down cell flow 19.

An operation of the cell assignment system shown in Fig. 10 will be described in detail.

In Fig. 10, when receiving a distance measurement instruction signal 11, in order to secure a distance measurement window, the cell assigner 4 reduces the present cell assignment number, calculates a cell assignment number for the distance measurement, and outputs the resulted up cell assignment control signal 15 to the cell multiplexer 6, thereby carrying out a cell assignment control. Then, when receiving a cell assignment instruction signal 10, the cell assigner 4 calculates a new cell assignment and outputs the resulted up cell assignment control signal 15 to the cell multiplexer 6 to control the cell assignment.

The error cell detector 2 inputs an error cell detection parameter 29 and detects an error cell of the up cell flow 7 on the basis of the error cell detection parameter 29. Further, when receiving an error cell detection INH signal 22, the error cell detector 2 inhibits the error cell detection.

When receiving the distance measurement instruction signal 11 and an up cell position indication signal insertion start signal 16, the error cell detection stop controller 28 controls the error cell detector 2 so that the error cell detector 2 may inhibit the error cell detection using the error cell detection INH signal 22. Thereafter, when inputting a distance measurement result signal 20 from the cell assigner 4, the error cell detection stop controller 28 controls the error cell detector 2 so that the error cell detector 2 may start the error cell detection using the error cell detection INH signal 22.

As described above, in a cell assignment system of a station device connected to a plurality of remote devices in a star network configuration in a transmission system performing a bi-directional TDMA communication on a cell basis by controlling a band setting of the remote devices in a station device-driven manner according to the present invention, the cell assignment system of the station device comprises means for changing a cell assignment number in a distance measuring and in operation in a station device-driven manner, and means for renewing an error cell detection parameter precisely at the same time when the cell assignment number is change. As a result, a space area allocated for a distance measuring can be used for an information transmission area in operation, and an error cell detection can be exactly carried out with a cell number change both in operation and in the distance measuring.

According to the present invention, Fig. 1 shows one embodiment of a cell assignment system of a station device for implementing the best results or advantages. Fig. 10 shows a somewhat simplified embodiment of a cell assignment system of a station device in which, while a cell assignment number is changed actually, an error cell detection is stopped and an error cell cannot be detected in such a period. However, this embodiment has a smaller construction of a circuit than the other embodiments.

While the present invention has been described with reference to the particular illustrative embodiments, it is not to be restricted by those embodiments but only by the appended claims. It is to be appreciated that those skilled in the art can change or modify the embodiments without departing from the scope and spirit of the present invention.

## Claims

1. A cell assignment system of a station device connected to a plurality of remote devices in a star network configuration in a transmission system performing a bi-directional time division multiple access communication on a cell basis by controlling a band setting of the remote devices in a station device-driven manner, comprising:
cell separating means which inputs an up cell flow from each remote device connected thereto, separates a distance measuring cell from the up cell flow and outputs the separated distance measuring cell and the remaining up cell flow from which the distance measuring cell is removed;
error cell detecting means which inputs the up cell flow from the cell separating means and various signals and outputs the up cell flow and an alarm when anything abnormal is detected in the input up cell flow;
control signal distributing means which receives a control signal from either an external terminal or an external device and outputs a distance measurement instruction signal and a cell assignment instruction signal;
cell assigning means which inputs the distance measuring cell from the cell separating means and outputs an up cell assignment control signal, and which inputs the distance measurement instruction signal and the cell assignment instruction signal from the control signal distributing means, calculates a cell assignment, and controls the cell assignment using the cell assignment calculation result and each memory value;
cell multiplexing means which inputs the up cell assignment control signal from the cell assigning means and a down cell flow, multiplexes the up cell assignment control signal to the down cell flow, and outputs the down cell flow; and
error cell detection parameter generating means to renew an error cell detection parameter at the same time when a cell assignment number is changed.

2. A cell assignment system of claim 1, further comprising:
remote device address storage means which is connected to the control signal distributing means and inputs a remote device address-control signal correspondence signal therefrom;
first timer means which is connected to the cell assigning means, starts a counting in response to a start instruction sent from the cell assigning means, and outputs a stop signal to the cell assigning means when time is up; and
second timer means which is connected to the error cell detection parameter generating means, starts a counting in response to a start instruction from the error cell detection parameter generating means, and outputs a stop signal to the error cell detection parameter generating means when time is up.

3. A cell assignment system of claim 1 or 2, the cell assigning means includes:
a distance measurement controller which inputs the distance measurement cell, the distance measurement instruction signal and a distance measurement area indication signal and outputs a distance measurement result signal;
a cell assignment calculator which inputs the cell assignment indication signal and the distance measurement area indication signal and outputs an up cell assignment position display signal, a cell assignment calculation end signal and a cell assignment result;
a controller which inputs the cell assignment instruction signal, the distance measurement instruction signal, the distance measurement result signal, an error cell detection parameter generation end signal and the cell assignment calculation end signal and outputs a gate control signal and a memory selector control signal;
a gate which inputs the gate control signal from the controller and the cell assignment result from the cell assignment calculator and selects one of a cell assignment RAM in a distance measuring, a cell assignment RAM 0-surface in operation and a cell assignment RAM 1-surface in operation to pass the cell assignment result to the selected one according to instructions of the gate control signal;
a memory selector which inputs the memory selector control signal from the controller, selects one of the cell assignment RAM in the distance measuring, the cell assignment RAM 0-surface in operation and the cell assignment RAM 1-surface in operation to read out data stored in the selected one according to instructions of the memory selector control signal, and outputs the readout data; and
an up cell assignment control signal generator which inputs the data output from the memory selector, generates an up cell position display signal of each remote device using the input data, and outputs the up cell position display signal as an up cell assignment control signal.

4. A system of claim 1, 2 or 3, wherein the error cell detection parameter generating means includes:
a memory address controller which inputs the cell assignment instruction signal, the distance measurement instruction signal, a distance measurement result signal, an up cell assignment position display signal, an up cell position calculation end signal for each remote device, a first error cell detection parameter generation end signal and a second error cell parameter generation end signal, and outputs an error cell detection parameter generation end signal, a first selector control signal, an error cell parameter generator selection signal, a first gate control signal, and a second gate control signal;
an up cell assignment change timing instructor which inputs the error cell detection generator selection signal, a frame pulse and an up cell position indication signal insertion start signal, and outputs a change timing indication signal and a cell selector control signal;
an up cell position calculator for each remote device, which inputs the up cell assignment position display signal, calculates an up cell position of each remote device, outputs the up cell position generation end signal for each remote device at the end of the calculation, and thereafter outputs the calculation result to a first selector;
the first selector which receives the calculation result from the up cell position calculator and the first selector control signal from the memory address controller and selects one of an up cell position RAM 0-surface and an up cell position RAM 1-surface for storing the calculation result of the up cell position calculator according to instructions of the first selector control signal;
a first gate which inputs the first gate control signal from the memory address controller, reads the data out of the up cell position RAM 0-surface using the first gate control signal as a trigger, and outputs the readout data according to instructions of the first gate control signal;
a second gate which inputs the second gate control signal from the memory address controller, reads the data out of the up cell position RAM 1-surface using the second gate control signal as a trigger, and outputs the readout data according to instructions of the second gate control signal;
a previous value storage RAM which stores data of the error cell detection parameter and outputs the stored data to a second selector;
a first error cell parameter generator in a normal operation, which outputs the error cell detection parameter held hitherto to the previous value storage RAM before receiving the data from the first gate or the second gate, calculates an error cell detection parameter in the normal operation on the basis of the data sent from the first gate or the second gate, and outputs the calculation result to the second selector, and the second error cell detection parameter generation end signal to the memory address controller;
a second error cell parameter generator in a distance measuring, which calculates an error cell detection parameter in the distance measuring on the basis of the data sent from the first gate or the second gate, and outputs the calculation result to the second selector, and the first error detection parameter generation end signal to the memory address controller; and
the second selector which inputs the second selector control signal from the up cell assignment change timing instructor, selects one of the data sent from the first error cell parameter generator, the data sent from the second error cell parameter generator, and the data sent from the previous value storage RAM according to instructions of the second selector control signal, and outputs the selected data as the error cell detection parameter.

5. A cell assignment system of a station device connected to a plurality of remote devices in a star network configuration in a transmission system performing a bi-directional time division multiple access communication on a cell basis by controlling a band setting of the remote devices in a station device-driven manner, comprising:
cell separating means which inputs an up cell flow from each remote device connected thereto, separates a distance measuring cell from the up cell flow and outputs the separated distance measuring cell and the remaining up cell flow from which the distance measuring cell is removed;
error cell detecting means which inputs the up cell flow from the cell separating means, an error cell detection parameter and an error cell detection inhibition signal and outputs the up cell flow and an alarm when anything abnormal is detected in the input up cell flow;
cell assigning means which inputs the distance measuring cell from the cell separating means, a cell assignment instruction signal, a distance measurement instruction signal and a distance measurement area indication signal and outputs an up cell assignment control signal and a distance measurement result signal;
cell multiplexing means which inputs the up cell assignment control signal from the cell assigning means, a frame pulse and a down cell flow, multiplexes the up cell assignment control signal to the down cell flow, and outputs the down cell flow and an up cell position indication signal insertion start signal; and
error cell detection stop controlling means which inputs the distance measurement instruction signal, the distance measurement result signal and the up cell position indication signal insertion start signal sent from the cell multiplexing means, and outputs the error cell detection inhibition signal to the error cell detecting means.

6. A system of any one of claims 1 to 5, wherein the error cell detecting means includes alarming means monitors a cell output from each remote device in the up cell flow on the basis of the error cell detection parameter, and outputs an alarm when an error is detected, but prevents the alarm when the cell assignment number is changed.
